# EUROPÄISCHE PATENTANMELDUNG

(11) **EP 2 030 705 A1**
(43) Veröffentlichungstag der Anmeldung: **04.03.2009**
(21) Anmeldenummer: 08015343.0
(22) Anmeldetag: 29.08.2008
(51) Int. Cl.: B21J 1/06

(54) **Warmumformwerkzeug**

(30) Priorität: 29.08.2007 DE 102007041013
(71) Anmelder: Schoof, Ulrich, 35578 Wetzlar (DE)
(72) Erfinder: Dietz, Andreas, D-35753 Greifenstein-Nenderoth (DE); Heck, Hermann, D-57520 Derschen (DE)
(74) Vertreter: Brune, Axel

(57) **Zusammenfassung**

Die vorliegende Erfindung bezieht sich auf ein Warmumformwerkzeug (1), umfassend ein Werkzeugoberteil (2) sowie ein Werkzeugunterteil (3), die relativ zueinander bewegbar sind, um das Warmumformwerkzeug (1) von einer geöffneten/geschlossenen Werkzeugstellung in eine geschlossene/geöffnete Werkzeugstellung zu überführen, wobei das Werkzeugoberteil (2) und das Werkzeugunterteil (3) jeweils eine kühlbare Umformeinheit (7, 8) umfassen, zwischen denen ein vorerwärmtes, in das Warmumformwerkzeug (1) eingebrachtes Halbzeug in der geschlossenen Werkzeugstellung zu einem Bauteil (6) umformbar ist, wobei zumindest eine der Umformeinheiten (7, 8) eine Mehrzahl von Umformflächen (700, 800) umfasst, die zumindest abschnittsweise voneinander beabstandet sind und in der geschlossenen Werkzeugstellung an eine Oberfläche des Halbzeugs anlegbar sind, und wobei zumindest zwischen einigen der Umformflächen (700, 800) jeweils ein Zwischenraum (9, 10) ausgebildet ist, durch den während des Betriebs des Warmumformwerkzeugs (1) ein Kühlmittel leitbar ist.

## Beschreibung

Die vorliegende Erfindung bezieht sich auf ein Warmumformwerkzeug, umfassend ein Werkzeugoberteil sowie ein Werkzeugunterteil, die relativ zueinander bewegbar sind, um das Warmumformwerkzeug von einer geöffneten/geschlossenen Werkzeugstellung in eine geschlossene/geöffnete Werkzeugstellung zu überführen, wobei das Werkzeugoberteil und das Werkzeugunterteil jeweils eine kühlbare Umformeinheit umfassen, zwischen denen ein vorerwärmtes, in das Warmumformwerkzeug eingebrachtes Halbzeug in der geschlossenen Werkzeugstellung zu einem Bauteil umformbar ist, wobei zumindest eine der Umformeinheiten eine Mehrzahl von Umformflächen umfasst, die zumindest abschnittsweise voneinander beabstandet sind und in der geschlossenen Werkzeugstellung an eine Oberfläche des Halbzeugs anlegbar sind, wobei zumindest zwischen einigen der Umformflächen jeweils ein Zwischenraum ausgebildet ist, durch den während des Betriebs des Warmumformwerkzeugs ein Kühlmittel leitbar ist.

Warmumformwerkzeuge der eingangs genannten Art sind aus dem Stand der Technik in unterschiedlichen Ausführungsformen bekannt. Das Werkzeugoberteil und das Werkzeugunterteil der bekannten Warmumformwerkzeuge sind auf Grund der großen Umformkräfte, die zum Umformen des Halbzeugs erforderlich sind, in der Regel massive und schwere Werkzeugbauteile, die effizient gekühlt werden müssen, um nach dem Umformprozess die Wärme aus dem Bauteil möglichst rasch abzuführen. So werden beispielsweise hochfeste Karosseriebleche aus einem borlegierten Stahl durch Tiefziehen bei einer Temperatur von etwa 900°C umgeformt und dann innerhalb weniger Sekunden auf etwa 170°C abgekühlt.

Aus dem Stand der Technik ist es zum Beispiel bekannt, in die Warmumformwerkzeuge eine Anzahl von Kühlkanälen zu bohren, durch die während des Betriebs des Warmumformwerkzeugs ein Kühlmittel strömen kann. Ein Nachteil dieser Lösung besteht darin, dass durch das Bohren keine gekrümmten, sondern nur geradlinige Kühlkanäle erzeugt werden können. Werkzeugmatrizen oder Werkzeugstempel können aus mehreren, einzeln gebohrten Segmenten zusammengesetzt werden, um andere Kühlkanalverläufe zu erhalten. Die Herstellung von Warmumformwerkzeugen aus derartigen Werkzeugsegmenten ist relativ aufwändig, da jedes Segment einzeln bearbeitet werden muss, bevor das Werkzeug zusammengesetzt werden kann. Darüber hinaus lassen sich aus den einzeln gebohrten Werkzeugsegmenten nur relativ einfache Kühlkanalverläufe erzeugen.

Aus dem Stand der Technik ist es ferner bekannt, Rohrsysteme in ein Warmumformwerkzeug einzugießen, um kompliziertere Kühlkanalverläufe zu erzeugen. Durch die eingegossenen Rohrsysteme kann die Kühlung des Warmumformwerkzeugs verbessert werden, so dass sich kürzere Taktzeiten ergeben. Ein Nachteil dieser Lösung besteht darin, dass die Herstellung der Rohrsysteme relativ aufwändig ist. Bei der Verwendung von Stahlrohren besteht ferner das Problem, dass sich bei Rohrdurchmessern über 20 mm der Kontakt zwischen den Stahlrohren und dem Gussmaterial verschlechtert.

Hier setzt die vorliegende Erfindung an.

Der vorliegenden Erfindung liegt die Aufgabe zu Grunde, ein Warmumformwerkzeug der eingangs genannten Art zur Verfügung zu stellen, welches einfach und kostengünstig herstellbar ist und darüber hinaus eine effiziente Kühlung ermöglicht.

Diese Aufgabe wird durch ein Warmumformwerkzeug der eingangs genannten Art mit den Merkmalen des kennzeichnenden Teils des Anspruchs 1 gelöst. Die Unteransprüche betreffen vorteilhafte Weiterbildungen der Erfindung.

Bei einem erfindungsgemäßen Warmumformwerkzeug ist gemäß Anspruch 1 vorgesehen, dass zumindest eine der Umformeinheiten eine Mehrzahl von Umformflächen umfasst, die zumindest abschnittsweise voneinander beabstandet sind und in der geschlossenen Werkzeugstellung an eine Oberfläche des Halbzeugs anlegbar sind, wobei zumindest zwischen einigen der Umformflächen jeweils ein Zwischenraum ausgebildet ist, durch den während des Betriebs des Warmumformwerkzeugs ein Kühlmittel leitbar ist, wobei das Werkzeugoberteil eine Mehrzahl von Umformsegmenten umfasst, die sich von einer Werkzeugoberteilabdeckung in das Innere des Werkzeugoberteils erstrecken und jeweils durch mindestens ein Distanzmittel voneinander beabstandet sind, und deren Umformflächen in der geschlossenen Werkzeugstellung an der Oberfläche des Halbzeugs anliegen, und/oder wobei das Werkzeugunterteil eine Mehrzahl von Umformsegmenten umfasst, die sich von einer Werkzeugunterteilabdeckung in das Innere des Werkzeugunterteils erstrecken und jeweils durch mindestens ein Distanzmittel voneinander beabstandet sind, und deren Umformflächen in der geschlossenen Werkzeugstellung an der Oberfläche des Halbzeugs anliegen. Die Umformsegmente und Distanzmittel des Werkzeugoberteils und/oder des Werkzeugunterteils können insbesondere lösbar miteinander verbunden sein. Das Halbzeug kann vor dem Einbringen in das Warmumformwerkzeug zumindest partiell zum Beispiel auf eine Temperatur erwärmt werden, die gleich der Härteumwandlungstemperatur oder größer als die Härteumwandlungstemperatur des Werkstoffs ist, aus dem das Halbzeug besteht. Bei härtbaren Bor-Mangan-Stählen liegt die Härteumwandlungstemperatur bei etwa 930°C und höher. Mittels der hier vorgeschlagenen erfindungsgemäßen Lösung kann eine wirksame Kühlung der Umformeinheiten - insbesondere der Umformflächen der Umformeinheiten - und des warmumgeformten Bauteils erreicht werden, welches zumindest abschnittsweise direkt mit dem Kühlmittel beaufschlagt werden kann. In die Zwischenräume, die zwischen benachbarten Umformflächen ausgebildet sind, kann während des Betriebs der Warmumformvorrichtung ein Kühlmittel eingebracht werden, um die Umformeinheiten und das Bauteil, das sich in einem Umformbereich zwischen den Umformflächen befindet, wirksam zu kühlen. Durch diese effiziente, dabei aber einfach und kostengünstig herstellbare Kühlung des Warmumformwerkzeugs beziehungsweise des umgeformten Bauteils können die Taktzeiten im Vergleich zu vielen aus dem Stand der Technik bekannten Lösungen erheblich verkürzt werden. Das Kühlmittel ist vorzugsweise flüssig und kann zum Beispiel Wasser, Eiswasser, Öl oder eine Salzlösung sein. An dieser Stelle soll angemerkt werden, dass der Begriff "Halbzeug" im Sinne der vorliegenden Erfindung nicht auf ebene Blechzuschnitte beschränkt ist, sondern sich auch auf vorgeformte, insbesondere auch auf vorprofilierte Blechteile, die mittels des Warmumformwerkzeugs umgeformt werden können, erstreckt. Die Anzahl der Umformflächen, die das Werkzeugoberteil beziehungsweise das Werkzeugunterteil aufweist, hängt dabei insbesondere von den umformtechnischen Anforderungen ab. Sofern das Bauteil zumindest einen geschlossenen, insbesondere im Wesentlichen hohlkammer- oder hohlprofilartigen Bauteilabschnitt aufweist, kann das Bauteil zumindest teilweise vom Kühlmittel durchströmt werden. Dadurch kann eine rasche Abkühlung geschlossener Bauteilabschnitte des Bauteils erreicht werden.

Um die Stabilität der Umformeinheit des Werkzeugoberteils und/oder des Werkzeugunterteils zu erhöhen, wird in einer besonders vorteilhaften Ausführungsform vorgeschlagen, dass die Umformsegmente des Werkzeugoberteils und/oder des Werkzeugunterteils zumindest abschnittsweise im Wesentlichen parallel zueinander orientiert sind.

In einer besonders vorteilhaften Ausführungsform wird vorgeschlagen, dass die Umformsegmente des Werkzeugoberteils und/oder des Werkzeugunterteils im Wesentlichen lamellenartig ausgebildet sind. Die Distanzmittel des Werkzeugoberteils und/oder des Werkzeugunterteils können besonders vorteilhaft segmentartig, insbesondere im Wesentlichen lamellenartig, ausgebildet sein. Die Distanzmittel des Werkzeugoberteils können sich insbesondere dann, wenn sie als Zwischenlamellen ausgeführt sind, von der Werkzeugoberteilabdeckung in das Innere des Werkzeugoberteils erstrecken. Wenn die Distanzmittel des Werkzeugunterteils als Zwischenlamellen ausgebildet sind, ist es bevorzugt, dass sie sich ebenfalls von der Werkzeugunterteilabdeckung in das Innere des Werkzeugunterteils erstrecken.

Ein Vorteil einer Umformeinheit des Werkzeugoberteils, die mehrere, im Wesentlichen lamellenartige Umformsegmente und gegebenenfalls mehrere, im Wesentlichen lamellenartige Distanzmittel umfasst, besteht darin, dass sich eine - am Materialaufwand gemessen - sehr große Oberflächen und eine hohe Stabilität der gesamten Anordnung ergeben. Durch diese Maßnahmen kann insbesondere die Kühleffizienz gesteigert werden. Ein Vorteil einer Umformeinheit des Werkzeugunterteils, die mehrere, im wesentlichen lamellenartige Umformsegmente und gegebenenfalls mehrere, im Wesentlichen lamellenartige Distanzmittel umfasst, besteht darin, dass sich eine - am Materialaufwand gemessen - sehr große Oberflächen und eine hohe Stabilität der gesamten Anordnung ergeben. Durch diese Maßnahmen kann insbesondere die Kühleffizienz gesteigert werden.

Es besteht in einer bevorzugten Ausführungsform die Möglichkeit, dass die Breite der Distanzmittel im Wesentlichen der Breite der Umformsegmente entspricht. Dadurch kann eine ausreichende Durchströmung der Zwischenräume und damit eine wirksame Kühlung der Umformeinheiten sowie des umgeformten Bauteils erreicht werden.

In einer besonders bevorzugten Ausführungsform ist vorgesehen, dass die Umformsegmente des Werkzeugoberteils parallel zu den Umformsegmenten des Werkzeugunterteils versetzt angeordnet sind. Durch diese Maßnahme kann insbesondere die Kühlung des Bauteils verbessert werden, da eine homogenere Beaufschlagung des Bauteils mit dem Kühlmittel im Sinne eines gleichmäßigeren Abkühlverlaufs erfolgen kann.

In einer vorteilhaften Ausführungsform kann vorgesehen sein, dass das Werkzeugoberteil und/oder das Werkzeugunterteil als einteiliger Umformblock ausgebildet sind/ist, in dem die Umformsegmente und die Distanzmittel integral ausgebildet sind. Es besteht ferner die Möglichkeit, dass das Werkzeugoberteil und/oder das Werkzeugunterteil eine Anzahl von Umformteilblöcken umfassen/umfasst, die jeweils aus einer Mehrzahl von Umformsegmenten und Distanzmitteln bestehen. Die Umformteilblöcke des Werkzeugoberteils sind vorzugsweise lösbar aneinander montiert. Die Umformteilblöcke des Werkzeugunterteils sind vorzugsweise lösbar aneinander montiert.

Es kann in einer besonders vorteilhaften Ausführungsform vorgesehen sein, dass das Werkzeugoberteil und/oder das Werkzeugunterteil eine Anzahl von Kühlmittelstutzen umfassen/umfasst, wobei zumindest einer der Kühlmittelstutzen einen Kühlmitteleinlass bildet, durch den das Kühlmittel in das Warmumformwerkzeug einströmen kann, und wobei zumindest einer der Kühlmittelstutzen einen Kühlmittelauslass bildet, durch den das Kühlmittel aus dem Warmumformwerkzeug ausströmen kann. Es besteht die Möglichkeit, dass zumindest an zwei einander gegenüberliegenden Seitenwänden des Werkzeugoberteils und/oder des Werkzeugunterteils jeweils mindestens ein Kühlmittelstutzen angeordnet ist. Es kann auch vorgesehen sein, dass an jeder der Seitenwände des Werkzeugoberteils und/oder des Werkzeugunterteils mindestens ein Kühlmittelstutzen angeordnet ist.

Es kann in einer bevorzugten Ausführungsform vorgesehen sein, dass zumindest in einigen der Seitenwände des Werkzeugoberteils und/oder des Werkzeugunterteils mindestens ein Kühlmittelverteilungskanal ausgebildet ist. Vorzugsweise kann jedem der Kühlmittelstutzen zumindest ein Kühlmittelverteilungskanal zugeordnet sein. Die Kühlmittelverteilungskanäle können sich insbesondere quer zur Längsachse des entsprechenden Kühlmittelstutzens erstrecken. Die Kühlmittelverteilungskanäle können sich vorteilhaft im Wesentlichen über die gesamte Länge der entsprechenden Seitenwand erstrecken, um insbesondere eine gleichmäßigere Durchleitung des Kühlmittels durch die Zwischenräume zu bewirken.

In einer vorteilhaften Ausführungsform besteht die Möglichkeit, dass die Umformsegmente des Werkzeugoberteils und/oder des Werkzeugunterteils mindestens eine erste Kühlmitteldurchtrittsöffnung aufweisen, und dass die Distanzmittel des Werkzeugoberteils und/oder des Werkzeugunterteils jeweils zumindest eine Aussparung aufweisen, wobei die Aussparungen mit den ersten Kühlmitteldurchtrittsöffnungen fluchten. Durch diese Maßnahme kann in vorteilhafter Weise ein erster Kühlmittelkanal zur Verfügung gestellt werden, der sich quer zur Orientierung der Umformsegmente und Distanzmittel zumindest einer der Umformeinheiten erstreckt.

In einer bevorzugten Ausführungsform besteht die Möglichkeit, dass die Umformsegmente des Werkzeugoberteils und/oder des Werkzeugunterteils mindestens eine zweite Kühlmitteldurchtrittsöffnung aufweisen, und dass die Distanzmittel des Werkzeugoberteils und/oder des Werkzeugunterteils zumindest eine Kühlmitteldurchtrittsöffnung aufweisen, wobei die Kühlmitteldurchtrittsöffnungen miteinander fluchten. Dadurch kann vorteilhaft zumindest ein weiterer Kühlmittelkanal zur Verfügung gestellt werden, der sich quer zur Orientierung der Umformsegmente und Distanzmittel zumindest einer der Umformeinheiten erstreckt. Durch das Vorsehen weiterer Kühlmitteldurchtrittsöffnung in den Umformsegmenten und Distanzmitteln können bei Bedarf weitere Kühlmittelkanäle zur Verfügung gestellt werden.

Es ist bevorzugt, dass zumindest einige der Umformsegmente und/oder der Distanzmittel des Werkzeugoberteils und/oder des Werkzeugunterteils ein oder mehrere Strömungsführungsmittel umfassen, die dazu geeignet und eingerichtet sind, die Strömungswege des Kühlmittels in den Zwischenräumen zwischen benachbarten Umformsegmenten des Werkzeugoberteils und/oder des Werkzeugunterteils einzustellen. Dadurch können die Strömungswege des Kühlmittels durch das Werkzeugoberteil und/oder durch das Werkzeugunterteil gezielt an die Werkzeuggeometrie beziehungsweise an die Bauteilgeometrie angepasst werden.

Zumindest einige der Strömungsführungsmittel können in einer vorteilhaften Ausführungsform integral mit den Umformsegmenten und/oder den Distanzmitteln ausgebildet sein. Es kann auch vorgesehen sein, dass zumindest einige der Strömungsführungsmittel lösbar an den Umformsegmenten und/oder an den Distanzmitteln angebracht sind, um dadurch die Flexibilität bei der Einstellung der Strömungswege des Kühlmittels im Werkzeugoberteil beziehungsweise im Werkzeugunterteil zu erhöhen. Die Strömungsführungsmittel können zum Beispiel offene Hohlkörper, insbesondere im Wesentlichen rohrförmige Bauteile, Kühlmittelleitbleche oder dergleichen sein.

Durch eine entsprechende Strömungsführung des Kühlmittels innerhalb des Werkzeugsoberteils beziehungsweise innerhalb des Werkzeugunterteils kann die Abkühlung des Bauteils nach dem Umformen gezielt beeinflusst werden. In den direkt mit dem Kühlmittel beaufschlagten Bereichen kann eine schnellere Abkühlung des Bauteils erreicht werden als in den nicht mit dem Kühlmittel beaufschlagten Bereichen. Durch eine lediglich partielle Kühlung kann die Vergütung/Härtung des Bauteils nach dem Warmumformprozess gezielt beeinflusst werden, so dass das Bauteil zum Beispiel nur partiell vergütete/gehärtete Bereiche aufweisen kann.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische Ansicht eines Warmumformwerkzeugs gemäß einem bevorzugten Ausführungsbeispiel der vorliegenden Erfindung;
- Fig. 2: eine Schnittansicht des Warmumformwerkzeugs gemäß Fig. 1;
- Fig. 3: eine Einzelheit des Warmumformwerkzeugs gemäß Fig. 1 und Fig. 2.

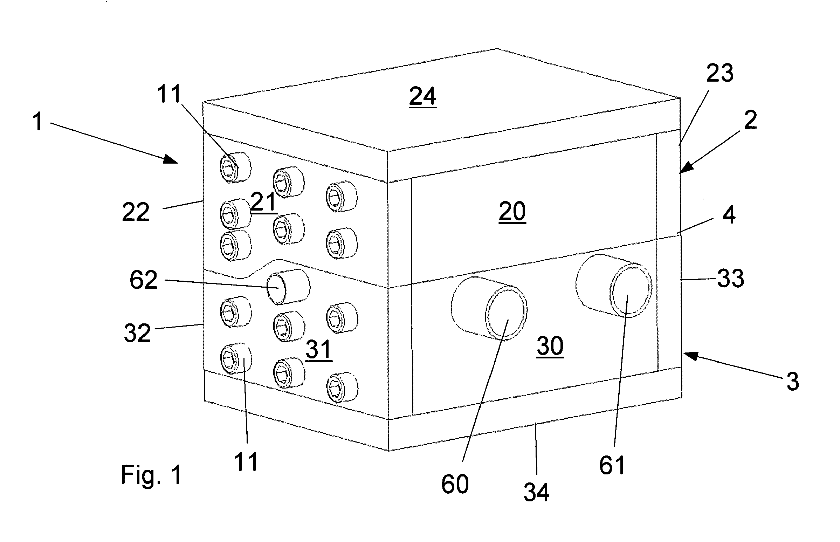

Zunächst wird auf Fig. 1 Bezug genommen, in der ein Warmumformwerkzeug 1 gemäß einem bevorzugten Ausführungsbeispiel der vorliegenden Erfindung perspektivisch dargestellt ist, welches zur Warmumformung eines Halbzeugs zur Herstellung eines Bauteils 6 geeignet ist. Der Begriff "Halbzeug" im Sinne dieser Erfindung ist nicht auf ebene Blechzuschnitte beschränkt, sondern erstreckt sich vielmehr auch auf vorgeformte, insbesondere auch auf vorprofilierte Blechteile, die mittels des Warmumformwerkzeugs 1 umgeformt werden können.

Das Warmumformwerkzeug 1 umfasst ein Werkzeugoberteil 2 sowie ein Werkzeugunterteil 3, die im Bereich einer Trennstelle 4 voneinander trennbar sind. In einer geschlossenen Werkzeugstellung, die in Fig. 1 dargestellt ist, bilden das Werkzeugoberteil 2 und das Werkzeugunterteil 3 ein geschlossenes Gehäuse des Warmumformwerkzeugs 1. Das Öffnen beziehungsweise Schließen des Warmumformwerkzeugs 1 kann zum Beispiel durch eine horizontale oder durch eine vertikale Bewegung des Werkzeugoberteils 2 relativ zum Werkzeugunterteil 3 erfolgen. Das Öffnen beziehungsweise Schließen des Warmumformwerkzeugs 1 sowie das Aufbringen der zum Umformen des Halbzeugs erforderlichen Umformkräfte kann zum Beispiel mit Hilfe von Umformpressen, Hydraulikeinrichtungen oder anderen Vorrichtungen erfolgen, die eine gesteuerte Relativbewegung des Werkzeugoberteils 2 gegenüber dem Werkzeugunterteil 3 bewirken können.

Das Gehäuse des Warmumformwerkzeugs 1 kann im Bereich der Trennstelle 4 geöffnet werden, um zwischen das Werkzeugoberteil 2 und das Werkzeugunterteil 3 ein zuvor zumindest partiell auf eine gewünschte Temperatur erwärmtes Halbzeug einzubringen und zu einem Bauteil 6 mit der gewünschten Form umzuformen. Das Halbzeug kann vor dem Einbringen in das Warmumformwerkzeug zumindest partiell zum Beispiel auf eine Temperatur erwärmt werden, die gleich der Härteumwandlungstemperatur oder größer als die Härteumwandlungstemperatur des Werkstoffs ist, aus dem das Halbzeug besteht. Bei härtbaren Bor-Mangan-Stählen liegt die Härteumwandlungstemperatur bei etwa 930°C und höher. Die zuvor zumindest partiell erwärmten Halbzeuge, die mit Hilfe des hier dargestellten Warmumformwerkzeugs 1 umgeformt werden können, sind in diesem Ausführungsbeispiel einfache Blechzuschnitte, die zu einem Z-Profilbauteil umgeformt werden. Andere konstruktive Ausgestaltungen des Warmumformwerkzeugs 1 können dazu geeignet sein, offene beziehungsweise geschlossene Profilbauteile umzuformen, die zuvor zumindest partiell erhitzt worden sind. Während des Schließens und/oder nach dem Schließen des Warmumformwerkzeugs 1 können darüber hinaus weitere, hier nicht explizit dargestellte bewegbare Umformmittel, insbesondere Keilschieber oder dergleichen, eingesetzt werden, die weitere Umformprozesse einleiten.

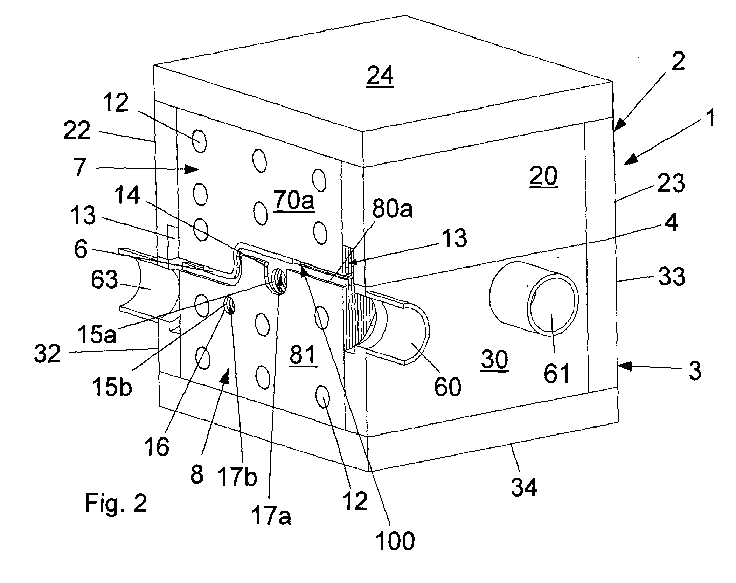

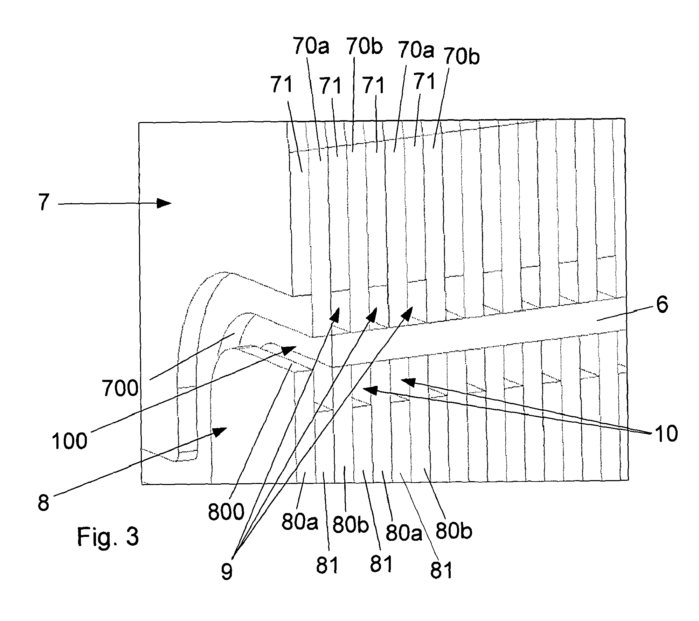

Das Werkzeugoberteil 2 weist insgesamt vier Seitenwände 20 - 23 sowie eine Werkzeugoberteilabdeckung 24 auf. Das Werkzeugunterteil 3 weist ebenfalls vier Seitenwände 30 - 33 sowie eine Werkzeugunterteilabdeckung 34 auf. Unter Bezugnahme auf Fig. 2 und 3 wird deutlich, dass das Werkzeugoberteil 2 und das Werkzeugunterteil 3 jeweils eine Umformeinheit 7, 8 umfassen, deren geometrische Ausgestaltungen jeweils an die Form des durch Warmumformen herzustellenden Bauteils 6 angepasst sind.

Wie insbesondere in Fig. 2 und 3 zu erkennen, sind die Umformeinheiten 7, 8 jeweils aus einer Mehrzahl von Umformsegmenten 70a, 70b, 80a, 80b und zwischen diesen angeordneten Distanzmitteln 71, 81 aufgebaut, die an der Werkzeugoberteilabdeckung 24 beziehungsweise an der Werkzeugunterteilabdeckung 34 angeordnet sind und sich im Wesentlichen parallel zueinander in das Innere des Warmumformwerkzeugs 1 erstrecken. Zwischen den Umformeinheiten 7, 8 ist ein Umformbereich 100 definiert, innerhalb dessen das Halbzeug umgeformt werden kann.

Wie insbesondere in Fig. 3 zu erkennen, weist jedes der Umformsegmente 70a, 70b, 80a, 80b jeweils eine Umformfläche 700, 800 auf. Die Umformflächen 700, 800 liegen bei geschlossenem Warmumformwerkzeug 1 an gegenüberliegenden Oberflächen des Halbzeugs beziehungsweise des daraus hergestellten Bauteils 6 an. Über die Umformflächen 700, 800 können die erforderlichen Umformkräfte auf das zumindest partiell vorerwärmte Halbzeug übertragen werden. Die Anzahl und der jeweilige geometrische Verlauf der Umformflächen 700, 800 sind dabei an die Form des Bauteils 6 und an die umformtechnischen Anforderungen angepasst.

Die Umformsegmente 70a, 70b, 80a, 80b sind in diesem Ausführungsbeispiel im Wesentlichen lamellenartig ausgebildet und erstrecken sich im Wesentlichen parallel zueinander und sind jeweils durch ein dazwischen angeordnetes, in diesem Ausführungsbeispiel ebenfalls im Wesentlichen lamellenartig ausgebildetes Distanzmittel 71, 81 voneinander beabstandet. Die Distanzmittel 71, 81 sind von der Werkzeugoberteilabdeckung 24 beziehungsweise der Werkzeugunterteilabdeckung 34 aus betrachtet kürzer als die Umformsegmente 70a, 70b, 80a, 80b ausgebildet, so dass zwischen benachbarten Umformsegmenten 70a, 70b, 80a, 80b des Werkzeugoberteils 2 beziehungsweise des Werkzeugunterteils 3 jeweils ein Zwischenraum 9, 10 ausgebildet ist.

Die Zwischenräume 9 im Werkzeugoberteil 2 werden also jeweils durch zwei benachbarte Umformsegmente 70a, 70b sowie durch das zwischen diesen angeordnete Distanzmittel 71 gebildet.
Entsprechend werden die Zwischenräume 10 im Werkzeugunterteil 3 jeweils durch zwei benachbarte Umformsegmente 80a, 80b sowie durch das zwischen diesen angeordnete Distanzmittel 81 gebildet. Die Umformsegmente 70a, 70b 80a, 80b und die Distanzmittel 71, 81 erstrecken sich jeweils zwischen zwei gegenüberliegenden Seitenwänden 20, 22, 30, 32 des Werkzeugoberteils 2 beziehungsweise des Werkzeugunterteils 3. In diesem Ausführungsbeispiel sind alle Umformsegmente 70a, 70b 80a, 80b und alle Distanzmittel 71, 81 im Wesentlichen gleich breit ausgeführt. Es ist allerdings auch möglich, zumindest einige Umformsegmente 70a, 70b 80a, 80b und/oder Distanzmittel 71, 81 unterschiedlich breit auszuführen.

In Fig. 3 ist zu erkennen, dass die Umformsegmente 70a, 70b des Werkzeugoberteils 2 zu den Umformsegmenten 80a, 80b des Werkzeugunterteils 3 parallel versetzt sind. Dadurch können insbesondere die Umformkräfte gleichmäßiger auf das Halbzeug verteilt werden.

Der konstruktive Aufbau der Umformeinheiten 7, 8 aus einer Mehrzahl von im Wesentlichen lamellenartig ausgebildeten Umformsegmenten 70a, 70b 80a, 80b und ebenfalls im Wesentlichen lamellenartig ausgebildeten Distanzmitteln 71, 81 hat den Vorteil, dass diese am Materialaufwand gemessen eine sehr große Oberfläche aufweisen, was insbesondere für eine effiziente Kühlung des Warmumformwerkzeugs 1 von Vorteil ist. Darüber hinaus liefert die Anordnung der Umformeinheiten 7, 8 aus im Wesentlichen lamellenartig ausgebildeten Umformsegmenten 70a, 70b 80a, 80b und Distanzmitteln 71, 81 eine sehr hohe Stabilität, so dass auch große Umformkräfte aufgenommen werden können.

Durch die im Werkzeugoberteil 2 beziehungsweise im Werkzeugunterteil 3 ausgebildeten Zwischenräume 9, 10 kann während des Betriebs des Warmumformwerkzeugs 1 ein Kühlmittel zur Werkzeug- beziehungsweise Bauteilkühlung geleitet werden. Dadurch, dass die Umformsegmente 70a, 70b des Werkzeugoberteils 2 parallel versetzt zu den Umformsegmenten 80a, 80b des Werkzeugunterteils 3 angeordnet sind, kann eine homogene Abkühlung des Bauteils 6 - insbesondere im Hinblick auf einen gleichmäßigen Abkühlverlauf - erreicht werden. Das Kühlmittel kann zum Beispiel Wasser, Eiswasser, Öl oder eine Salzlösung sein. Durch eine Kühlung nach dem Warmumformen kann das Bauteil 6 partiell oder vollständig vergütet/gehärtet werden. Insbesondere lassen sich die Härteeigenschaften des umgeformten Bauteils 6 durch definiertes Abkühlen gezielt anpassen.

Wie in Fig. 2 zu erkennen, sind die benachbarten Umformsegmente 70a, 70b 80a, 80b und Distanzmittel 71, 81 des Werkzeugoberteils 2 beziehungsweise des Werkzeugunterteils 3 mittels einer Mehrzahl von Verbindungselementen 12 (vorzugsweise lösbar) miteinander verbunden, die in Montageöffnungen, die in den Umformsegmenten 70a, 70b 80a, 80b und in den Distanzmitteln 71, 81 ausgebildet sind, eingreifen. Dadurch können aus den Umformsegmenten 70a, 70b 80a, 80b und Distanzmitteln 71, 81 umformstabile Umformeinheiten 7, 8 gebildet werden.

Wie in Fig. 1 dargestellt, erstrecken sich durch mindestens eine der Seitenwände 21, 31 des Werkzeugoberteils 2 und des Werkzeugunterteils 3 eine Mehrzahl von Haltemitteln 11, insbesondere Haltebolzen oder dergleichen, in das Innere des Werkzeugoberteils 2 beziehungsweise des Werkzeugunterteils 3 hinein, um die oben beschriebene Anordnung der Umformsegmente 70a, 70b 80a, 80b und Distanzmittel 71, 81 an den Seitenwänden 21, 31 zu halten. Vorzugsweise sind an den jeweils gegenüberliegenden Seitenwänden 23, 33 des Werkzeugoberteils 2 beziehungsweise des Werkzeugunterteils 3 ebenfalls entsprechende Haltemittel vorgesehen.

Das Werkzeugunterteil 3 weist an den Seitenwänden 30, 31, 32 eine Anzahl von Kühlmittelstutzen 60, 61, 62, 63 auf, durch die ein Kühlmittel in das Innere des Warmumformwerkzeugs 1 einströmen beziehungsweise aus dem Inneren des Warmumformwerkzeugs 1 wieder ausströmen kann. Die Anzahl der Kühlmittelstutzen 60, 61, 62, 63 an den Seitenwänden 30, 31, 32 kann beliebig gewählt sein. Einer/mehrere der Kühlmittelstutzen 60, 61, 62, 63 des Werkzeugunterteils 3 ist ein Kühlmitteleinlass/sind Kühlmitteleinlässe, durch den/die das Kühlmittel in das Warmumformwerkzeug 1 einströmen kann/können. Einer/mehrere der Kühlmittelstutzen 60, 61, 62, 63 des Werkzeugunterteils 3 ist ein Kühlmittelauslass/sind Kühlmittelauslässe, aus dem/aus denen das Kühlmittel aus dem Warmumformwerkzeug 1 ausströmen kann/können. Gemäß einer Variante des hier gezeigten Ausführungsbeispiels können alternativ oder zusätzlich an mindestens einer der Seitenwände 20, 21, 22, 23 des Werkzeugoberteils 2 ebenfalls entsprechende Kühlmittelstutzen angeordnet sein.

An einer ersten Seitenwand 30 des Werkzeugunterteils 3 sind in diesem Ausführungsbeispiel zwei im Wesentlichen rohrförmige Kühlmittelstutzen 60, 61 angeordnet, deren Längsachsen im Wesentlichen parallel zu den Umformsegmenten 80a, 80b und zu den Distanzmitteln 81 orientiert sind. Darüber hinaus sind an einer der ersten Seitenwand 30 gegenüberliegenden zweiten Seitenwand 32 des Werkzeugunterteils 3 ebenfalls zwei im Wesentlichen rohrförmige Kühlmittelstutzen 64 (von denen in Fig. 2 allerdings nur einer zu erkennen ist) angeordnet, deren Längsachsen sich ebenfalls im Wesentlichen parallel zu den Umformsegmenten 80a, 80b und zu den Distanzmitteln 81 des Werkzeugunterteils 3 erstrecken. Das Kühlmittel kann durch die Kühlmittelstutzen 60, 61, 64 in das Warmumformwerkzeug 1 einströmen beziehungsweise wieder aus diesen ausströmen. Die Umformeinheiten 7, 8 des Warmumformwerkzeugs 1 sowie das umgeformte Bauteil 6 können auf diese Weise direkt mit dem Kühlmittel beaufschlagt und dadurch wirksam gekühlt werden. Durch den Kontakt des zumindest partiell erwärmten, umgeformten Bauteils 6 mit den Umformflächen 700, 800 der gekühlten Umformsegmente 70a, 70b, 80a, 80b ergibt sich auch eine Abkühlung des Bauteils 6 durch Wärmeleitung. Dadurch, dass die Umformeinheiten 7, 8 des Warmumformwerkzeugs 1 kühlbar ausgeführt sind, kann wirksam verhindert werden, dass die Umformeinheiten 7, 8 durch den Kontakt mit dem erwärmten Bauteil 6 ihrerseits zu stark erwärmt werden.

Um die Durchströmung des Warmumformwerkzeugs 1, insbesondere auch des Werkzeugoberteils 2, mit dem Kühlmittel zu verbessern, ist in diesem Ausführungsbeispiel an jeden der Kühlmittelstutzen 60, 61, 64 angrenzend in den ersten und zweiten Seitenwänden 20, 22 des Werkzeugoberteils 2 jeweils ein Kühlmittelverteilungskanal 13 ausgebildet. Die Kühlmittelverteilungskanäle 13 erstrecken sich vorzugsweise entlang der gesamten Länge der jeweiligen Seitenwand 20, 22. Durch diese Maßnahme können die Kühlmittelverteilung sowie die Durchströmung der Zwischenräume 9, 10 zwischen benachbarten Umformsegmenten 70a, 70b, 80a, 80b mit dem Kühlmittel wirksam verbessert werden.

Unter erneuter Bezugnahme auf Fig. 1 wird deutlich, dass in diesem Ausführungsbeispiel auch an einer dritten Seitenwand 31 des Werkzeugunterteils 3 ein Kühlmittelstutzen 62 ausgebildet ist, durch den zusätzliches Kühlmittel in das Warmumformwerkzeug 1 einströmen beziehungsweise in Abhängigkeit von der Strömungsführung wieder aus diesem ausströmen kann, um eine weitere Kühlung der Umformeinheiten 7, 8 sowie des Bauteils 6 zu bewirken. Zu diesem Zweck kann auch an einer vierten Seitenwand 33 des Werkzeugunterteils 3, welche der dritten Seitenwand 32 gegenüberliegt, zumindest ein entsprechender Kühlmittelstutzen vorgesehen sein, der allerdings in Fig. 1 und 2 nicht erkennbar ist.

Wie in Fig. 2 dargestellt, weisen die Distanzmittel 81 des Werkzeugunterteils 3 in diesem Ausführungsbeispiel jeweils eine zum Umformbereich 100 des Warmumformwerkzeugs 1 hin offene Aussparung 14 auf, durch die zumindest ein Teil des Kühlmittels in den Umformbereich 100 strömen kann. Ferner weisen die Distanzmittel 81 in diesem Ausführungsbeispiel eine Kühlmitteldurchtrittsöffnung 16 auf. Die Umformsegmente 80a, 80b weisen ihrerseits jeweils eine erste und eine zweite Kühlmitteldurchtrittsöffnung 15a, 15b auf, die mit den Aussparungen 14 beziehungsweise mit den Kühlmitteldurchtrittsöffnungen 16 der Distanzmittel 81 unter Bildung zweier Kühlmittelkanäle 17a, 17b fluchten. Durch diese beiden Kühlmittelkanäle 17a, 17b kann das Kühlmittel quer zur Orientierung der Umformsegmente 80a, 80b und der Distanzmittel 81 strömen, um die Umformeinheiten 7, 8 und das Bauteil 6 zusätzlich zu kühlen.

Die Strömungswege des Kühlmittels innerhalb des Werkzeugoberteils 2 beziehungsweise innerhalb des Werkzeugunterteils 3 können konstruktiv beliebig verändert und so an die Werkzeugform beziehungsweise an die Bauteilform angepasst werden. Ferner können die Anzahl und die Verläufe der Kühlmittelkanäle 17a, 17b verändert werden. Ferner können zumindest an einigen der Umformsegmente und/oder Distanzmittel 70a, 70b, 71, 80a, 80b, 81 des Werkzeugoberteils 2 und/oder des Werkzeugunterteils 3 ein oder mehrere Strömungsführungsmittel angeordnet sein, die dazu geeignet und eingerichtet sind, die Strömungswege des Kühlmittels innerhalb des Warmumformwerkzeugs 1 gezielt anzupassen und zu verändern. Die Strömungsführungsmittel können integral mit den Umformsegmenten 70a, 70b, 80a, 80b und/oder mit den Distanzmitteln 71, 81 ausgebildet sein oder separate Bauteile sein, die unlösbar oder in einer alternativen Ausführungsform auch lösbar an den Umformsegmenten 70a, 70b, 80a, 80b und/oder an den Distanzmitteln 71, 81 angebracht sein können.

Eine lösbare Anbringung der Strömungsführungsmittel an den Umformsegmenten 70a, 70b, 80a, 80b und/oder an den Distanzmitteln 71, 81 hat den Vorteil, dass die Strömungswege des Kühlmittels durch einen einfachen Austausch beziehungsweise durch das Hinzufügen und/oder Weglassen einzelner Strömungsführungsmittel individuell eingestellt und angepasst werden können. Beispielsweise können die Strömungsführungsmittel als Kühlmittelleitbleche und/oder als offene Hohlkörper, insbesondere als im Wesentlichen rohrförmige Teile, ausgebildet sein. Ferner können zumindest einige der Distanzmittel 71, 81 des Werkzeugoberteils 2 und/oder des Werkzeugunterteils 3 konstruktiv so ausgeführt sein, dass sie zumindest abschnittsweise nicht mit dem Kühlmittel durchströmt werden können.

Die Strömungswege des Kühlmittels innerhalb des Werkzeugoberteils 2 beziehungsweise des Werkzeugunterteils 3 können auch so eingestellt sein, dass Teilbereiche der Umformeinheit 7 des Werkzeugoberteils 2 und/oder Teilbereiche der Umformeinheit 8 des Werkzeugunterteils 3, die über die Umformflächen 700, 800 mit dem Bauteil 6 in Kontakt sind, nicht mit dem Kühlmittel beaufschlagt und gekühlt werden. Durch eine derartige Strömungsführung kann das Abkühlverhalten des Bauteils 6 nach dem Warmumformprozess gezielt beeinflusst werden. In den mit dem Kühlmittel beaufschlagten Bereichen der beiden Umformflächen 7, 8 kann eine schnellere (partielle) Abkühlung des Bauteils 6 erreicht werden als in den nicht mit dem Kühlmittel beaufschlagten Bereichen. Durch diese Maßnahme kann die Vergütung/Härtung des Bauteils 6 nach dem Warmumformprozess gezielt beeinflusst werden, so dass partiell vergütete/gehärtete Bauteilbereiche entstehen können. Wenn die Umformflächen 7, 8 demgegenüber vollständig gekühlt werden, kann eine vollständige Vergütung/Härtung des Bauteils 6 nach dem Warmumformprozess erreicht werden.

Das Einbringen des Kühlmittels in das Warmumformwerkzeug 1 kann während des Umformprozesses und/oder unmittelbar danach erfolgen. Nach erfolgter Abkühlung können das Werkzeugoberteil 3 und das Werkzeugunterteil 3 wieder voneinander getrennt werden, um das umgeformte und zumindest partiell vergütete/gehärtete Bauteil 6 aus dem Warmumformwerkzeug 1 zu entnehmen. Es kann in einer Variante vorgesehen sein, dass das Warmumformwerkzeug 1 nach dem Umformen des Bauteils 6 durch eine Trennung des Werkzeugoberteils 2 vom Werkzeugunterteil 3 gelüftet wird und dabei zusätzliches Kühlmittel in den Umformbereich 100 geleitet wird, um das Bauteil 6 zusätzlich zu kühlen.

Sofern das Bauteil 6 zumindest einen geschlossenen, insbesondere im Wesentlichen hohlkammer- oder hohlprofilartigen Bauteilabschnitt aufweist, kann das Bauteil 6 zumindest teilweise vom Kühlmittel durchströmt werden. Dadurch kann eine rasche Abkühlung geschlossener Bauteilabschnitte des Bauteils 6 erreicht werden.

## Patentansprüche

1. Warmumformwerkzeug (1), umfassend ein Werkzeugoberteil (2) sowie ein Werkzeugunterteil (3), die relativ zueinander bewegbar sind, um das Warmumformwerkzeug (1) von einer geöffneten/geschlossenen Werkzeugstellung in eine geschlossene/geöffnete Werkzeugstellung zu überführen, wobei das Werkzeugoberteil (2) und das Werkzeugunterteil (3) jeweils eine kühlbare Umformeinheit (7, 8) umfassen, zwischen denen ein vorerwärmtes, in das Warmumformwerkzeug (1) eingebrachtes Halbzeug in der geschlossenen Werkzeugstellung zu einem Bauteil (6) umformbar ist, wobei zumindest eine der Umformeinheiten (7, 8) eine Mehrzahl von Umformflächen (700, 800) umfasst, die zumindest abschnittsweise voneinander beabstandet sind und in der geschlossenen Werkzeugstellung an eine Oberfläche des Halbzeugs anlegbar sind, wobei zumindest zwischen einigen der Umformflächen (700, 800) jeweils ein Zwischenraum (9, 10) ausgebildet ist, durch den während des Betriebs des Warmumformwerkzeugs (1) ein Kühlmittel leitbar ist, **dadurch gekennzeichnet, dass**
- das Werkzeugoberteil (2) eine Mehrzahl von Umformsegmenten (70a, 70b) umfasst, die sich von einer Werkzeugoberteilabdeckung (24) in das Innere des Werkzeugoberteils (2) erstrecken und jeweils durch mindestens ein Distanzmittel (71) voneinander beabstandet sind, und deren Umformflächen (700) in der geschlossenen Werkzeugstellung an der Oberfläche des Halbzeugs anliegen, und/oder
- das Werkzeugunterteil (3) eine Mehrzahl von Umformsegmenten (80a, 80b) umfasst, die sich von einer Werkzeugunterteilabdeckung (34) in das Innere des Werkzeugunterteils (3) erstrecken und jeweils durch mindestens ein Distanzmittel (81) voneinander beabstandet sind, und deren Umformflächen (800) in der geschlossenen Werkzeugstellung an der Oberfläche des Halbzeugs anliegen.

2. Warmumformwerkzeug (1) nach Anspruch 1, **dadurch gekennzeichnet, dass** die Umformsegmente (70a, 70b, 80a, 80b) des Werkzeugoberteils (2) und/oder des Werkzeugunterteils (3) zumindest abschnittsweise im Wesentlichen parallel zueinander orientiert sind.

3. Warmumformwerkzeug (1) nach einem der Ansprüche 1 oder 2, **dadurch gekennzeichnet, dass** die Umformsegmente (70a, 70b, 80a, 80b) des Werkzeugoberteils (2) und/oder des Werkzeugunterteils (3) im Wesentlichen lamellenartig ausgebildet sind.

4. Warmumformwerkzeug (1) nach einem der Ansprüche 1 bis 3, **dadurch gekennzeichnet, dass** die Distanzmittel (71, 81) des Werkzeugoberteils (2) und/oder des Werkzeugunterteils (3) segmentartig, insbesondere im Wesentlichen lamellenartig, ausgebildet sind.

5. Warmumformwerkzeug (1) nach einem der Ansprüche 1 bis 4, **dadurch gekennzeichnet, dass** die Breite der Distanzmittel (71, 81) im Wesentlichen der Breite der Umformsegmente (70a, 70b, 80a, 80b) entspricht.

6. Warmumformwerkzeug (1) nach einem der Ansprüche 1 bis 5, **dadurch gekennzeichnet, dass** die Umformsegmente (70a, 70b) des Werkzeugoberteils (2) parallel zu den Umformsegmenten (80a, 80b) des Werkzeugunterteils (3) versetzt angeordnet sind.

7. Warmumformwerkzeug (1) nach einem der Ansprüche 1 bis 6, **dadurch gekennzeichnet, dass** das Werkzeugoberteil (2) und/oder das Werkzeugunterteil (3) jeweils als einteiliger Umformblock ausgebildet sind/ist, in dem die Umformsegmente (70a, 70b, 80a, 80b) und die Distanzmittel (71, 81) integral ausgebildet sind.

8. Warmumformwerkzeug (1) nach einem der Ansprüche 1 bis 7, **dadurch gekennzeichnet, dass** das Werkzeugoberteil (2) und/oder Werkzeugunterteil (3) eine Anzahl von Kühlmittelstutzen (60 - 63) umfassen/umfasst, wobei zumindest einer der Kühlmittelstutzen (60 - 63) einen Kühlmitteleinlass bildet, durch den das Kühlmittel in das Warmumformwerkzeug (1) einströmen kann, und wobei zumindest einer der Kühlmittelstutzen (60 - 63) einen Kühlmittelauslass bildet, durch den das Kühlmittel aus dem Warmumformwerkzeug (1) ausströmen kann.

9. Warmumformwerkzeug (1) nach Anspruch 8, **dadurch gekennzeichnet, dass** zumindest an zwei einander gegenüberliegenden Seitenwänden (30 - 33) des Werkzeugunterteils (3) jeweils mindestens ein Kühlmittelstutzen (60 - 63) angeordnet ist.

10. Warmumformwerkzeug (1) nach einem der Ansprüche 1 bis 9, **dadurch gekennzeichnet, dass** zumindest in einigen der Seitenwände (20, 21, 22, 23, 30, 31, 32, 33) des Werkzeugoberteils (2) und/oder des Werkzeugunterteils (3) mindestens ein Kühlmittelverteilungskanal (13) ausgebildet ist.

11. Warmumformwerkzeug (1) nach Anspruch 10, **dadurch gekennzeichnet, dass** jedem der Kühlmittelstutzen (60 - 63) zumindest ein Kühlmittelverteilungskanal (13) zugeordnet ist.

12. Warmumformwerkzeug (1) nach Anspruch 11, **dadurch gekennzeichnet, dass** sich die Kühlmittelverteilungskanäle (13) quer zur Längsachse des entsprechenden Kühlmittelstutzens (60 - 63) erstrecken.

13. Warmumformwerkzeug (1) nach einem der Ansprüche 1 bis 12, **dadurch gekennzeichnet, dass** die Umformsegmente (70a, 70b, 80a, 80b) des Werkzeugoberteils (2) und/oder des Werkzeugunterteils (3) mindestens eine erste Kühlmitteldurchtrittsöffnung (15a) aufweisen, und dass die Distanzmittel (71, 81) des Werkzeugoberteils (2) und/oder des Werkzeugunterteils (3) jeweils zumindest eine Aussparung (14) aufweisen, wobei die Aussparungen (14) mit den ersten Kühlmitteldurchtrittsöffnungen (15a) fluchten.

14. Warmumformwerkzeug (1) nach einem der Ansprüche 1 bis 13, **dadurch gekennzeichnet, dass** die Umformsegmente (70a, 70b, 80a, 80b) des Werkzeugoberteils (2) und/oder des Werkzeugunterteils (3) mindestens eine zweite Kühlmitteldurchtrittsöffnung (15b) aufweisen, und dass die Distanzmittel (71, 81) des Werkzeugoberteils (2) und/oder des Werkzeugunterteils (3) jeweils zumindest eine Kühlmitteldurchtrittsöffnung (16) aufweisen, wobei die Kühlmitteldurchtrittsöffnungen (15b, 16) miteinander fluchten.

15. Warmumformwerkzeug (1) nach einem der Ansprüche 1 bis 14, **dadurch gekennzeichnet, dass** zumindest einige der Umformsegmente (70a, 70b, 80a, 80b) und/oder der Distanzmittel (71, 81) des Werkzeugoberteils (2) und/oder des Werkzeugunterteils (3) ein oder mehrere Strömungsführungsmittel umfassen, die dazu geeignet und eingerichtet sind, die Strömungswege des Kühlmittels in den Zwischenräumen (9, 10) zwischen benachbarten Umformsegmenten (70a, 70b, 80a, 80b) des Werkzeugoberteils (2) und/oder des Werkzeugunterteils (3) einzustellen.
